# EUROPÄISCHE PATENTSCHRIFT

(11) **EP 4 308 632 B1**
(45) Veröffentlichungstag und Bekanntmachung des Hinweises auf die Patenterteilung: **02.12.2026**
(21) Anmeldenummer: 22714425.0
(22) Anmeldetag: 14.03.2022
(51) Int. Cl.: C08G 77/12, C08L 83/04

(54) **PULVERBETT-3D-DRUCKVERFAHREN ZUR HERSTELLUNG ELASTISCHER FORMKÖRPER AUS SILICONEN UND FÜR DAS VERFAHREN GEEIGNETES SILICONHARZ-HALTIGES PULVER**
POWDER BED 3D PRINTING PROCESS FOR PRODUCING ELASTIC SHAPED BODY COMPOSED OF SILICONES, AND SILICONE RESIN-CONTAINING POWDER SUITABLE FOR THE PROCESS
PROCÉDÉ D'IMPRESSION 3D À LIT DE POUDRE POUR PRODUIRE UN CORPS FAÇONNÉ ÉLASTIQUE COMPOSÉ DE SILICONES ET POUDRE CONTENANT DE LA RÉSINE DE SILICONE APPROPRIÉE POUR LE PROCÉDÉ

(30) Priorität: 16.03.2021 DE 102021106369
(43) Veröffentlichungstag der Anmeldung: 24.01.2024
(73) Patentinhaber: Universität Rostock, 18055 Rostock (DE)
(72) Erfinder: KRÖGER, Justin Jannis, 18057 Rostock (DE); HARLOFF, Jörg, 18225 Kühlungsborn (DE); SCHULZ, Axel, 18059 Rostock (DE); SEITZ, Hermann, 18055 Rostock (DE); POLLEY, Christian, 18055 Rostock (DE)
(74) Vertreter: Gulde & Partner
(86) Internationale Anmeldenummer: PCT/EP2022/056475
(87) Internationale Veröffentlichungsnummer: WO 2022/194748

(56) Entgegenhaltungen:
- WO-A1-2016/044547
- US-A- 5 760 116

## Beschreibung

Die Erfindung betrifft ein Pulverbett-3D-Druckverfahren zur Herstellung elastischer Formkörper aus Siliconen und ein für das Verfahren geeignetes Siliconharz-haltiges Pulver.

### Technologischer Hintergrund

3D-Druck, auch als additive Fertigung bekannt, ist ein Fertigungsverfahren bei dem Material Schicht für Schicht aufgetragen und so dreidimensionale Gegenstände (Werkstücke) erzeugt werden. Dabei erfolgt der schichtweise Aufbau computergesteuert aus einem oder mehreren flüssigen oder festen Werkstoffen nach vorgegebenen Maßen und Formen. Typische Werkstoffe für das 3D-Drucken sind Kunststoffe, Kunstharze, Keramik und Metalle.

Beim 3D-Druck nach der Variante des Pulverbett-3D-Druckverfahrens liegt das Baumaterial im Rohzustand pulverförmig vor. Ein Beispiel für ein Pulver-3D-Druckverfahren ist das sogenannte Binder-Jetting-Verfahren, bei dem ein pulverförmiges Ausgangsmaterial an ausgewählten Stellen mit einem Binder verklebt wird, um so Werkstücke zu erzeugen. Pulverbett-3D-Druckverfahren werden derzeit vornehmlich für den schnellen Druck von unelastischen Objekten eingesetzt.

Der 3D-Druck von elastischen Werkstoffen auf Basis von Siliconen ist bisher nur in sehr beschränktem Maße möglich. US 2016/0263827 A1 beschreibt ein Verfahren, bei welchem ein Vernetzungskatalysator in ein Bad aus flüssigem Silicon über eine im dreidimensionalen Raum bewegliche Dosiernadel zugefügt wird und zu einer örtlichen Vernetzung führt. Das vernetzte Bauteil wird anschließend mechanisch aus dem Bad entfernt und aufbereitet. Dieses Verfahren ist auf weiche Silicone mit Shore A kleiner 50 beschränkt und erlaubt nicht den Aufbau aus mehreren Materialien.

WO 2017/040874 A1 beschreibt ein Verfahren, bei dem Silicon aus einer Düse extrudiert wird, die im dreidimensionalen Raum bewegt wird. Das Silicon kann dabei thermisch vernetzt werden. Das Extrusionsverfahren eignet sich jedoch nur für sehr einfache Geometrien.

Ein Verfahren zum 3D-Druck von Siliconen nach dem sogenannten "Drop-on-demand" Prozess (DOD-Prozess) beschreibt die WO 2016/071241 A1. Beim Drop-on-Demand-Drucken wird das pastöse Silicon-Material in Form von Tröpfchen aus einem Dosierventil ausgestoßen.

Dieses Verfahren ist für den Druck eines Silicon-Materials und ggf. Stützmaterials geeignet. WO 2017/089496 A1 betrifft hochviskose vernetzbare Siliconkautschuk-Zusammensetzungen, deren Eigenschaften die Herstellung von elastomeren Formkörpern nach dem DOD-Prozess ermöglichen. Der DOD-Prozess ist allerdings technisch sehr aufwendig und die Fertigungsgeschwindigkeit ist vergleichsweise gering, sodass eine breite industrielle Anwendung derzeit nicht gegeben ist.

WO2016/044547A1 offenbart ein 3D-Druckverfahren, bei dem ein lichtaushärtendes Silicongemisch ausgedruckt und anschließend belichtet wird. Das Gemisch enthält: A) eine Organosilizium-Verbindung (A) mit durchschnittlich zumindest 2 Si-gebundenen Ethylenengruppen pro Molekül, die durch mindestens 4 Si-Atomen voneinander getrennt sind; B) eine Organosilizium-Verbindung (B) mit durchschnittlich zumindest 2 Si-gebundenen Wasserstoffatomen pro Molekül und zwar in einer Menge, die zur Aushärtung ausreicht; und C) einen lichtaktivierten Hydrosilylierungs-Katalysator. Das Gemisch wird als Flüssigkeit oder Paste aufgetragen, auch in Verbindung mit einem Pulverbett-3D-Druckverfahren. Elastische Artikel können unter Verwendung einer linearen oder verzweigten Verbindung (A) bzw. (B) mit D-Einheiten erhalten werden. Die H- bzw. Ethylenenfunktion der Verbindungen (A) oder (B) kann terminal gebunden sein. Die Ethylenenfunktion der Verbindungen (A) kann Vinyl sein.

US 5,760,116 A offenbart Elastomere, welche durch Anlagerungs-Polymerisation eines Alkenylpolyorganosiloxans und eines M^{H}Q-Harzes hergestellt wurden.

Pulverbett-3D-Druckverfahren für Werkstücke aus elastischen Siliconen sind bisher nicht entwickelt worden.

### Zusammenfassung der Erfindung

Die Erfindung betrifft den erstmaligen Einsatz des Pulverbett-3D-Druckverfahrens zur Herstellung elastischer Formkörper aus Siliconen und umfasst die Schritte:
a) Schichtweises Ausstreichen eines Pulvers in einer Pulverbett-3D-Apparatur, wobei das Pulver ein Siliconharz der Formel (I) enthält:

   M_{y}M'_{z}DₐT_{b}Q_{c} (I)

   mit
   M = [R₃SiO_{1/2}]
   M' = [R'R₂SiO_{1/2}]
   D = [R₂SiO_{2/2}]
   T = [RSiO_{3/2}]
   Q = [SiO_{4/2}]
   wobei jedes R unabhängig voneinander für C1-C10 Alkoxy, C1-C10 Alkyl C6-C10 Aryl oder Hydroxy steht und
   R' = H ist
   und wobei für die Indizes gilt
   y = 0 bis 400 (vorzugsweise 0 bis 200)
   z = 2 bis 440 (vorzugsweise 2 bis 220)
   a = 0 bis 60 (vorzugsweise 0 bis 30)
   b = 0 bis 40 (vorzugsweise 0 bis 20)
   c = 6 bis 400 (vorzugsweise 6 bis 200) $400 \geq a + b + c \geq 9 \left(vorzugsweise 200\geq a+b+c\geq 9\right)$ und $\left(z+y\right) / \left(a+b+c\right) = 0 , 3 bis 1 , 1 \left(vorzugsweise 0,3 bis 1,0\right) ;$
b) Auftragen einer Vernetzerlösung auf der Schicht aus Schritt a) entsprechend einer Druckvorlage für den elastischen Formkörper, wobei die Vernetzerlösung einen Hydrosilylierungs-Katalysator und ein Siliconöl der allgemeinen Formel (II) umfasst:

   MₐM'_{b}D_{c}D'_{d} (II)

   mit
   M = [R₃SiO_{1/2}]
   M' = [R'R₂SiO_{1/2}]
   D = [R₂SiO_{2/2}]
   D' = [R'RSiO_{2/2}]
   wobei jedes R unabhängig voneinander für C1-C10 Alkyl oder C6-C10 Aryl steht und
   R' für Vinyl steht
   und wobei für die Indizes gilt
   a = 0 bis 2
   b = 0 bis 2 (insbesondere b = 2)
   c = 8 bis 500 (insbesondere 50 bis 250)
   d = 0 bis 20 (insbesondere d = 0) $a + b = 2$ und $b + d \geq 2 ;$
   c) Wiederholen der Schritte a) und b) entsprechend der Druckvorlage für den elastischen Formkörper; und
   d) Entfernern des nicht vernetzten Pulvers.

Der aus Schritt d) erhaltene Formkörper kann anschließend mit der in Schritt b) beschriebenen Vernetzerlösung nachbehandelt werden. Außerdem kann eine Nachbehandlung der Formkörper mit organischem Lösungsmittel wie Ethanol erfolgen, wobei überschüssiges Pulver vom Formkörper entfernt wird.

In dem Pulverbett-3D-Druckverfahren werden demnach mit einem speziell hergestellten pulverförmigen Siliconharz in Kombination mit einer Vernetzerlösung elastische Objekte gedruckt. Das Pulverbett-3D-Druckverfahren hat sich bislang nur für den schnellen Druck von unelastischen Objekten ausgezeichnet. Mittels der Erfindung lassen sich erstmals auch größere elastische Objekte schnell und kostengünstig herzustellen. Das Verfahren ist auf Industriedruckern anwendbar und ermöglicht damit den Druck von Objekten in hohen Stückzahlen sowie Objekten im Metermaßstab. Auch werden reine Silicone verwendet. Es sind also beispielsweise keine photolytischen Funktionalitäten im Silicon zur Vernetzung erforderlich, wie es z.B. bei stereolithographischen Verfahren der Fall ist. Damit sind die Eigenschaften des Silicons vollständig in den gedruckten Objekten wiederzufinden.

Beim Druck wird eine Schicht des Siliconharzes in einem Pulverbett ausgestrichen und mit der Vernetzerlösung, die ortsselektiv in xy-Ebenen mit einem beheizbarem Einzeltropfen- oder Multijet-System aufgetragen wird, ausgehärtet. Die Vernetzerlösung kann somit aus einem oder mehreren Einzeltropfen oder über Multijetdruckköpfe in xy-Ebene ortsselektiv eingetragen werden. Mittels des Multijet-Systems kann eine deutlich höhere Produktivität als mit dem Einzeltropfen-System erzielt werden. Im Anschluss wird das Pulverbett in der z-Ebene abgesenkt, eine weitere Schicht des Pulvers über der vorherigen aufgetragen und erneut mit der Vernetzerlösung an bestimmten Punkten quervernetzt. Dieses Prozedere wird Schicht für Schicht bis zum fertigen Objekt wiederholt. Das nicht vernetzte Siliconharz fungiert als Stützstruktur, somit muss keine zusätzliche Stützmatrix verdruckt werden. Nach Ende des Druckprozesses kann das nicht vernetzte Siliconharzpulver einfach mit Druckluft entfernt werden. Dieses abgetrennte Pulver kann fast vollständig für Folgedrucke recycelt werden. Zuletzt kann die Oberfläche des elastischen Formkörpers mit der Vernetzerlösung mittels einer Tauchung/Tauchverfahren, Bepinselung oder Infiltration nachbehandelt und damit geglättet bzw. gestärkt werden. Eine Glättung der Oberfläche kann auch durch die Nachbehandlung mit einem organischen Lösungsmittel wie Toluol, Xylol oder Ethanol geschehen. Auch eine finale thermische Nachbehandlung kann den gedruckten Formkörper weiter stärken und mögliche zurückgebliebenen flüchtige Komponenten wie Lösungsmittel entfernen.

Vorzugsweise steht im Siliconharz der Formel (I) R für Methyl und/oder Ethoxy und/oder Hydroxy. Das Pulver mit dem Siliconharz der Formel (I) hat vorzugsweise einen mittleren Partikeldurchmesser D50 im Bereich von 5 bis 250 µm. Die Partikelgrößenbestimmung erfolgt durch Messung der Winkelabhängigkeit der Intensität von gestreutem Licht eines Laserstrahls, der eine dispergierte Partikelprobe durchdringt (Messung nach ISO 13320 (2009)).

Vorzugsweise werden ein oder mehrere der Indices des Siliconharz der Formel (I) wie folgt festgelegt: y = 0 bis 200, z = 2 bis 220, a = 0 bis 30 b = 0 bis 20, c = 6 bis 200, 200 ≥ a + b + c ≥ 9, z/y = 0,2 bis 10 und (z+y)/(a+b+c) = 0,3 bis 1,0. Besonders bevorzugt liegen alle Indices in den genannten bevorzugten Grenzen.

Mittels des Sprühtrocknungsverfahrens können die Fließeigenschaften für das Verfahren optimiert werden. Dazu wird das Siliconharz in einem organischen Lösungsmittel wie Ethylacetat oder Ethanol gelöst. Die 8 bis 70 %ige Siliconharz-Lösung wird mit einer Fließgeschwindigkeit von 5 bis 30 mL/min eingetragen und mittels eines N₂-Flow von 300 bis 700 L/h versprüht. Die Inlet-Temperatur wird zwischen 90 und 180 °C und die Durchflussrate des Aspirators wird zwischen 20 und 35 m³/h eingestellt. Dadurch werden Outlet-Temperaturen zwischen ungefähr 40 bis 90 °C erzielt. Durch das erhaltene feine Pulver, bestehend aus sphärischen Partikeln, werden die rheologischen Eigenschaften des Harzes deutlich verbessert. Dies führt zu verbesserten Ausstreicheigenschaften und damit zu einem gleichmäßigen und feinen Pulverbett, wodurch glatte Konturen und sehr hohe Auflösungen erzielt werden können. Die Vernetzerlösung enthält neben dem Siliconöl (vorzugsweise 80 - 98 Gew.% der Lösung), dem Katalysator (vorzugsweise 5 - 450 ppm) ein unpolares Lösungsmittel (vorzugsweise 2 - 20 Gew.% der Lösung). Das Lösungsmittel ist beispielsweise Toluol oder Xylol. Die Vernetzerlösung setzte sich beispielsweise zu 90,0 % aus den Siliconölen mit endständigen Vinylgruppen, 150 ppm aus dem Karstedt-Katalysator und 9,95 % aus einem unpolaren Lösungsmittel wie z.B. Toluol, Xylol, 1-Heptanol, Cyclohexanon oder Pentylacetat zusammen.

Ferner ist bevorzugt, wenn im Siliconöl der Formel (II) R für Methyl steht. Das Siliconöl der Formel (II) kann ferner eine mittlere Molmasse im Bereich von 3000 bis 30000 g/mol aufweisen. Je nach Molekulargewicht bzw. Kettenlänge des verwendeten Siliconöls können bei den Vernetzungsprodukten verschiedene Elastizitäten eingestellt werden. Bevorzugt ist ferner, wenn im Siliconöl der Formel (II) d = 0 und b = 2 ist. Ergänzend oder alternativ hierzu ist im Siliconöl der Formel (II) c = 50 bis 250.

Der Hydrosilylierungs-Katalysator ist vorzugsweise 1,1,3,3-Tetramethyl-1,3-divinyldisiloxan-platin (Karstedt-Katalysator).

In dem sich wiederholenden Schritt a) können Pulver mit unterschiedlicher Zusammensetzung eingesetzt werden. Alternativ oder ergänzend können in dem sich wiederholenden Schritt b) Vernetzerlösungen mit unterschiedlicher Zusammensetzung eingesetzt werden. Auf diese Weise lassen sich demnach auch Formkörper mit anisotropen Materialeigenschaften im 3D-Druckverfahren herstellen. Zum Beispiel können verschiedene Vernetzerlösungen, die aus Siliconölen mit verschiedenen Kettenlängen bestehen, eingesetzt werden und damit Köper mit verschiedenen Elastizitäten (anisotrope Materialeigenschaften) gedruckt werden. Auch sind beispielsweise, durch den Eintrag von Farbstoffen (wie Farbpigmenten wie beispielsweise Eisenoxid) in die Vernetzerlösung, mehrfarbige Objekte herstellbar. Die beiden genannten Beispiele lassen sich am besten durch den Einsatz mehrere Jetting-Systems umsetzten. Ebenso ist denkbar, durch Zusatz leitender und halbleitender Additive, zum Beispiel von Nanopartikeln aus Graphit oder Graphen Nanoröhrchen (mit beispielsweise TUBALL^{™} Graphen-Nanoröhren, TUBALL^{™} Matrix 601 oder TUBALL^{™} Matrix 601 von der Firma OCSiAl), leitend- und halbleitend-flexible Körper zu erzeugen. So wird beispielsweise der Druck von Leiterbahnen innerhalb eines komplett flexiblen Objektes ermöglicht. Das in dem Verfahren eingesetzte Pulver kann neben dem Siliconharz demnach weitere Komponenten, wie Farbstoffe, Leitpartikel oder Füllstoffe (wie pyrogenes SiO₂, zur Stärkung der mechanischen Eigenschaften) aufweisen. Der Anteil des Siliconharzes ist vorzugsweise > 40 Gew.%, insbesondere > 50 Gew.% des Pulvers. Alternativ oder ergänzend können auch der Vernetzerlösung weitere Komponenten, wie beispielsweise Farbstoffe, leitfähige oder halbleitende Stoffe, zugesetzt werden. Diese Komponenten liegen insbesondere in Lösung oder als Dispersion in der Vernetzerlösung vor. Der Anteil der Komponenten in der Vernetzerlösung ist vorzugsweise < 10 Gew.%, insbesondere < 5 Gew.%. Alternativ kann auch eine Beimengung der Farbstoffe, leitfähige oder halbleitende Stoffe in einem Anteil von vorzugsweise < 10 Gew.%, insbesondere < 5 Gew.% zu dem Pulver erfolgen.

Für das Verfahren ergeben sich eine Vielzahl von Anwendungsbereichen. Diese erstrecken sich über das Gesundheitswesen, über die Sportbranche und den Consumer-Bereich bis hin zu technischen Bereichen, wie Maschinenbau und Fahrzeugbau. Das Verfahren kann sowohl zur Herstellung von Prototypen als auch zur Serienfertigung speziell von individualisierten Endprodukten eingesetzt werden. Das Verfahren eignet sich im industriellen Einsatz zum Druck von elastischen Objekten, weil es kostengünstig und vergleichsweise schnell ist.

Ein weiterer Aspekt der Erfindung betrifft ein Pulver, das ein Siliconharz der Formel (I) enthält:

M_{y}M'_{z}DₐT_{b}Q_{c} (I)

mit
M = [R₃SiO_{1/2}]
M' = [R'R₂SiO_{1/2}]
D = [R₂SiO_{2/2}]
T = [RSiO_{3/2}]
Q = [SiO_{4/2}]
wobei jedes R unabhängig voneinander für C1-C10 Alkoxy, C1-C10 Alkyl, C6-C10 Aryl oder Hydroxy steht und
R' = H ist
und wobei für die Indizes gilt
y = 0 bis 400 (vorzugsweise 0 bis 200)
z = 2 bis 440 (vorzugsweise 2 bis 220)
a = 0 bis 60 (vorzugsweise 0 bis 30)
b = 0 bis 40 (vorzugsweise 0 bis 20)
c = 6 bis 400 (vorzugsweise 6 bis 200) $400 \geq a + b + c \geq 9 \left(vorzugsweise 200\geq a+b+c\geq 9\right)$ und $\left(z+y\right) / \left(a+b+c\right) = 0 , 3 bis 1 , 1 \left(vorzugsweise 0,3 bis 1,0\right) .$

Weitere bevorzugte Ausführungsformen der Erfindung ergeben sich aus den Unteransprüchen und der nachfolgenden Beschreibung.

### Kurzbeschreibung der Figuren

Die Erfindung wird nachfolgend anhand von Ausführungsbeispielen und einer dazugehörigen Zeichnung näher erläutert. Die einzige Figur zeigt:

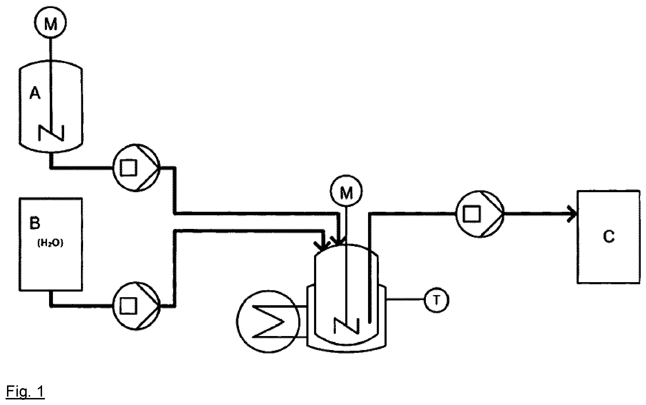

Fig. 1 eine schematische Darstellung des Versuchsaufbaus zur Herstellung der erfindungsgemäßen Siliconharze der Formel (I).

### Detaillierte Beschreibung der Erfindung

Nachfolgend wird ein Pulverbett-3D-Druckverfahren zur Herstellung elastischer Formkörper aus Siliconen näher beschrieben. Das Verfahren umfasst die Schritte:
a) Schichtweises Ausstreichen eines Pulvers in einer Pulverbett-3D-Apparatur, wobei das Pulver ein Siliconharz der Formel (I) enthält:

   M_{y}M'_{z}DₐT_{b}Q_{c} (I)

   mit
   M = [R₃SiO_{1/2}]
   M' = [R'R₂SiO_{1/2}]
   D = [R₂SiO_{2/2}]
   T = [RSiO_{3/2}]
   Q = [SiO_{4/2}]
   wobei jedes R unabhängig voneinander für C1-C10 Alkoxy (insbesondere Ethoxy), C1-C10 Alkyl (insbesondere Methyl), C6-C10 Aryl (insbesondere Phenyl) oder Hydroxy steht und
   R' = H ist
   und wobei für die Indizes gilt
   y = 0 bis 400 (vorzugsweise 0 bis 200)
   z = 2 bis 440 (vorzugsweise 2 bis 220)
   a = 0 bis 60 (vorzugsweise 0 bis 30)
   b = 0 bis 40 (vorzugsweise 0 bis 20)
   c = 6 bis 400 (vorzugsweise 6 bis 200) $400 \geq a + b + c \geq 9 \left(vorzugsweise 200\geq a+b+c\geq 9\right)$ und $\left(z+y\right) / \left(a+b+c\right) = 0 , 3 bis 1 , 1 \left(vorzugsweise 0,3 bis 1,0\right) ;$
b) Auftragen einer Vernetzerlösung auf der Schicht aus Schritt a) entsprechend einer Druckvorlage für den elastischen Formkörper, wobei die Vernetzerlösung einen Hydrosilylierungs-Katalysator und ein Siliconöl der allgemeinen Formel (II) umfasst:

   MₐM'_{b}D_{c}D'_{d} (II)

   mit
   M = [R₃SiO_{1/2}]
   M' = [R'R₂SiO_{1/2}]
   D = [R₂SiO_{2/2}]
   D' = [R'RSiO_{2/2}]
   wobei jedes R unabhängig voneinander für C1-C10 Alkyl oder C6-C10 Aryl (insbesondere Methyl) steht und
   R' für Vinyl steht
   und wobei für die Indizes gilt
   a = 0 bis 2
   b = 0 bis 2 (insbesondere b = 2)
   c = 8 bis 500 (insbesondere 50 bis 250)
   d = 0 bis 20 (insbesondere d = 0) $a + b = 2$ und $b + d \geq 2 ;$
   c) Wiederholen der Schritte a) und b) entsprechend der Druckvorlage für den elastischen Formkörper; und
   d) Entfernern des nicht vernetzten Pulvers.

Der aus Schritt d) erhaltene Formkörper kann anschließend mit der in Schritt b) beschriebenen Vernetzerlösung nachbehandelt werden. Außerdem kann eine Nachbehandlung der Formkörper mit organischem Lösungsmittel wie Ethanol erfolgen, wobei überschüssiges Pulver vom Formkörper entfernt wird.

Die im Schritt b) und gegebenenfalls bei der Nachbehandlung verwendeten Siliconöle sind kommerziell erhältlich (z.B. bei Gelest, Inc. unter dem Handelsnamen DMS-V22) oder über übliche Verfahren der Siliconchemie zugänglich.

### A. Herstellung der Siliconharze

Die Siliconharze mit Hydridofunktionen aus Schritt a) lassen sich analog zu bekannten Syntheseverfahren von Siliconharzen, wie nachfolgend dargestellt, herstellen. Alternativ ist eine Synthese über Natriumsilicate denkbar (vgl. US 2009/0093605 A1). Auch eine Funktionalisierung von MQ-Siliconharze mit Hydridofunktionen ist möglich (vgl. US 5,527,873 A).

### A.1 Allgemeine Synthesevorschrift

Die Synthese kann in an sich bekannter Weise über eine Hydrolyse-Kondensation-Reaktion erfolgen. Dazu werden reaktive Silane mit 2 bis 4 C1-C10 Alkoxygruppen (Komponente A), wie beispielweise Tetraethoxysilan Si(OEt)₄, Chlorsilane mit 3 C1-C10 Alkyl- beziehungsweise C6-C10 Arylgruppen (Komponente B), wie beispielsweise Trimethylchlorsilan Me₃SiCl, und Hydridochlorsilane mit 2 C1-C10 Alkyl- beziehungsweise C6-C10 Arylgruppen (Komponente C), wie beispielsweise Dimethylchlorsilan HMe₂SiCl, nach folgendem Schema miteinander umgesetzt:

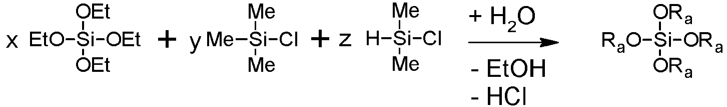

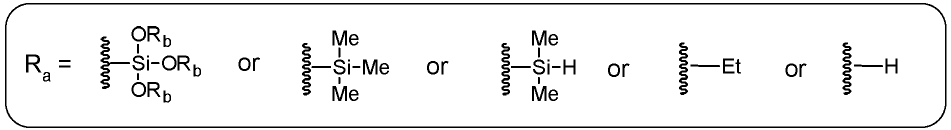

R_{b} stellt dabei eine Variation an verschiedenen Resten dar, die sich aus den eingesetzten Edukten und ihren Kondensationsprodukten ergibt. Im obigen Beispiel umfasst dies Ethylgruppen oder weitere Siliconbausteine wie z.B. -Si(OEt)₂-OSi(OH)(OSiMe₃)₂.

Für die Synthese werden Verhältnisse von z/y = 0,5 bis y=0 (beispielsweise z/y = 0,77) und (z+y)/x = 0,5 bis 1,1 (vorzugsweise 0,6 bis 1,0) (beispielsweise (z+y)/x = 0,99) vorgegeben.

Zum Beispiel wurde ein Gemisch aus den drei Silanen (V= ca. 20 mL) und 140 mL Essigsäureethylester in einen Reaktor mit einer Flussrate von 20 mL/min überführt. Außerdem wurden 20 mL H₂O mit einer Flussrate von 2,5 mL/min hinzugegeben (Flussratenverhältnis von Silangemisch zu Wasser im 8:1 Verhältnis). Das Reaktionsgemisch wurde auf 60 °C temperiert und mit einem KPG-Rührer (Glasflügelrührer) stark durchmischt. Mit 22,5 mL/min wurde das Reaktionsprodukt kontinuierlich aus dem Reaktionskolben (Reaktor) abgeführt. Dabei betrug die ungefähre Verweilzeit 2,5 min. Die Reaktionslösung wurde mit Wasser (viermal mit je 50 mL) gewaschen, um die entstandenen Säuren (HCl und auch in geringen Mengen Essigsäure) zu entfernen. Anschließend wurde das Lösungsmittel mittels Rotationsverdampfer und Vakuumtrocknung entfernt. Es wurden Ausbeuten von über 90 % erzielt.

Figur 1 zeigt die schematische Darstellung des Versuchsaufbaus. Im Behälter A befindet sich ein durch den Rührmotor M in Bewegung gehaltenes Gemisch der drei Komponenten A, B und C. Im Behälter B befindet sich Wasser. Über Pumpleitungen werden beide Komponenten synchron in einen Reaktor mit einer Temperiereinheit T gepumpt und mit einem weiteren Rührmotor M in Bewegung gehalten. Das erhaltene Siliconharz wird kontinuierlich in einen weiteren Behälter C überführt.

Eigenschaften des Harzes, wie Erweichungspunkt oder Elastizität nach der Quervernetzung, lassen sich zum Beispiel durch Variation der Mischungsverhältnisse der Komponenten A bis C in den angegebenen Grenzen oder durch Variation der Reaktionsparameter z.B. über die Temperatur, Durchmischung, Konzentrationen (wie Lösungsmittelmenge) oder die Fließraten erzielen. Ferner können auch die Substituenten der eingesetzten Silane variiert werden. So ist es zum Beispiel auch möglich, als Komponente C ein Gemisch aus verschiedenen Dialkyl-/ bzw. Diarylchlorhydridosilanen oder als Komponente B ein Gemisch unterschiedlicher Trialkyl-/ bzw. Triarylchlorsilane einzusetzen. Anstelle des beispielswiese verwendeten Tetraethoxysilans lassen sich auch andere Tetraalkoxysilane als Komponente A einsetzen. Auch können anstellte von 4 Alkoxygruppen in Komponente A 1 oder 2 andere Substituenten unabhängig voneinander ausgewählt aus der Gruppe umfassend C1-C10 Alkyl und C6-C10 Aryl vorhanden sein.

Als weiteres Bespiel kann die Synthese über Disiloxane, wie Tetramethyldisiloxan und Hexamethyldisiloxan, mit Tetraethoxysilan Si(OEt)₄ durch Säurekatalyse erfolgen. Dabei wird die Synthese mittels eines Batch-Ansatzes durchgeführt. Dazu werden reaktive Silane mit 2 bis 4 C1-C10 Alkoxygruppen (Komponente A; der Anteil der Silane mit 2 und 3 Alkoxygruppen kann < 15% betragen), wie beispielweise Tetraethoxysilan Si(OEt)₄, Disiloxane mit 6 C1-C10 Alkyl- beziehungsweise C6-C10 Arylgruppen (Komponente D), wie beispielsweise Hexamethyldisiloxan Me₆Si₂O, und Disiloxane mit mindestens einer (vorzugsweise mindestens 2) Hydridofunktion mit höchstens 6 (vorzugsweise höchstens 4, besonders bevorzugt mit der Anzahl an 2 Hydridofunktionen) C1-C10 Alkyl- beziehungsweise C6-C10 Arylgruppen (Komponente E), wie beispielsweise 1,1,3,3-Tetramethyldisiloxan H₂Me₄Si₂O, nach folgendem Schema miteinander umgesetzt:

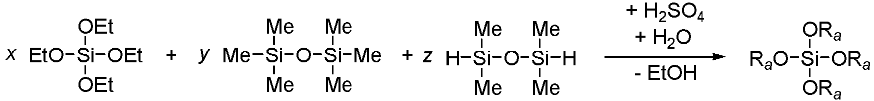

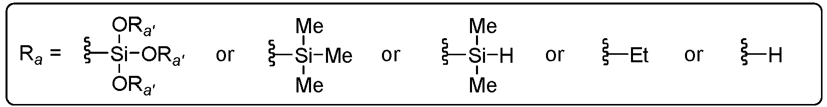

R_{b} stellt dabei eine Variation an verschiedenen Resten dar, die sich aus den eingesetzten Edukten und ihren Kondensationsprodukten ergibt. Im obigen Beispiel umfasst dies Ethylgruppen oder weitere Siliconbausteine wie z.B. -Si(OEt)₂-OSi(OH)(OSiMe₃)₂.

Für die Synthese werden Verhältnisse von z/y = 0,1 bis y=0 (beispielsweise z/y = 0,61) und (z+y)/x = 0,4 bis 1,1 (beispielsweise (z+y)/x = 1,00) vorgegeben.

Zum Beispiel wurden 10 - 80 mL Ethanol mit 20 - 55 mL H₂O in einem 500 mL-Dreihalskolben vorgelegt, auf 50 °C temperiert, 0,005 - 0,03 mL konz. H₂SO₄ und anschließend ungefähr 290 mmol Komponente A hinzugegeben. Das Gemisch wurde für 2 - 6 h mit einem KPG-Rührer (Flügelrührer) durchmischt. Es wurde ein Gemisch aus Komponente D und E und 50 - 100 mL eines Lösungsmittels wie Ethylacetat oder Toluol in den Reaktionskolben gegeben. Zusätzlich wurden 0,5 - 3 mL konz. H₂SO₄ hinzugetropft. Danach wurden unter weiterem Rühren verschiedene Temperaturprogramme durchgeführt. Beispielsweise 1 h bei 60°C, 1 h bei 70°C und 2 h bei 80 °C. Bei der Aufarbeitung wurde wie im vorherigen Beispiel vorgegangen. Auch bei diesem Beispiel lassen sich die Eigenschaften des Harzes, wie Erweichungspunkt oder Elastizität nach der Quervernetzung, zum Beispiel durch Variation der Mischungsverhältnisse der Komponenten A, D und E in den angegebenen Grenzen oder durch Variation der Reaktionsparameter z.B. über die Temperatur, Temperaturverlauf, Durchmischung, Konzentrationen (wie Lösungsmittelmenge) einstellen. Ferner können auch die Substituenten der eingesetzten Silane bzw. Disiloxane analog wie zum erstgenannten Beispiel variiert werden. So ist es zum Beispiel auch möglich, als Komponente D und E ein Gemisch aus unterschiedlichen Disiloxanen mit verschiedenen Alkyl-/ bzw. Arylgruppen einzusetzen, bei Komponente E beispielsweise auch ein Gemisch unterschiedlicher Disiloxane mit verschiedener Anzahl (1 bis 6; vorzugsweise 2) an Hydridofunktionen einzusetzen. Anstelle des beispielswiese verwendeten Tetraethoxysilans lassen sich auch andere Tetraalkoxysilane als Komponente A einsetzen. Auch können anstellte von 4 Alkoxygruppen in Komponente A 1 oder 2 andere Substituenten unabhängig voneinander ausgewählt aus der Gruppe umfassend C1-C10 Alkyl und C6-C10 Aryl vorhanden sein.

Die hergestellten Harze weisen eine sehr gute Löslichkeit in organischen Lösungsmitteln, wie Toluol, Xylol, 1-Heptanol, Cyclohexanon und Pentylacetat, auf und sind auch gut in Ethanol löslich. Es wurden mittlere Molmassen von etwa 750 bis 25000 g/mol und eine Molmassenverteilung (PDI) von etwa 1,1 bis 6,0 mittels GPC bestimmt. Außerdem wurden bei den Synthesen Harze mit einem Hydridofunktionsanteil von 8 bis 30 mol% erhalten, wobei dieser Anteil mittels ¹H-NMR-Spektroskopie bestimmt wurde. Dieses Verhältnis hat sich in Vernetzungstests als besonders geeignet erwiesen. Auch wurden durch ¹H- (mit Zugabe eines Standards) und ²⁹Si(IG)-NMR-Spektroskopie die Anteile der funktionellen Einheiten und damit die M'/M- sowie (M+M')/(D+T+Q)- bzw. (M+M')/(T+Q)-Verhältnisse der Siliconharze bestimmt.

### Beispiel A1

Das Silan-Lösungsmittel-Gemisch (SLG), bestehend aus 140 mL Ethylacetat, 36,19 g (173,7 mmol) Tetraethoxysilan (TEOS), 7,80 g (71,80 mmol) Trimethylchlorsilan (TMCS) und 4,57 g (48,34 mmol) Dimethylchlorsilan (DMCS), wurde in einem Erlenmeyerkolben mit einem Rührfisch gut durchmischt. Somit wurde ein DMCS/TMCS-Verhältnis von 0,67 und ein (DMCS+TMCS)/TEOS-Verhältnis von 0,69 eingesetzt. In einem 500 mL-Dreihalskolben, der auf 60 °C temperiert und mit einem KPG-Rührer (Flügelrührer) sowie einem Dimroth-Kühler versehen wurde, wurde das SLG und deionisiertes Wasser mittels Peristaltikpumpen eingetragen. Für das SLG wurde eine Fließrate von 10 mL/min und für das deionisierte Wasser wurde eine Fließrate von 1,25 mL/min gewählt. 5 min nach dem Beginn des gleichzeitigen Eintrages von Wasser und SLG wurde die Reaktionslösung mit einer dritten Peristaltikpumpen mit einer Fließrate von 11,25 mL/min in ein Auffanggefäß überführt. Zeitgleich wurden die Peristaltikpumpen des SLG und Wassers abgeschaltet, als das SLG leer war. In einem Scheidetrichter wurde die Reaktionslösung aus dem Auffanggefäß fünfmal mit ca. 40 mL deionisierte Wasser gewaschen, um die entstandenen Säuren (Salzsäure und Spuren von Essigsäure) zu entfernen. Anschließend wurde das Lösungsmittel mittels eines Rotationsverdampfers entfernt und im Vakuum bis zur Trockne eingeengt. Es wurde eine Ausbeute von 18,0 g (92,3%) erhalten.

Durch eine ATR-IR-Messung wurde bei 2140 cm⁻¹ eine charakteristische Si-H-Schwingung und bei 2900 und 2960 cm⁻¹ zwei charakteristische C-H-Schwingungen nachgewiesen. Zusätzlich ist eine breite Bande der Si-OH-Gruppen sowie des Wassers, die sich von 3100 bis 3700 cm⁻¹ erstreckt, zu sehen. Mittels ¹H-NMR-Sprektroskopie wurden die Signale der Hydrido-(5,05 ppm in C₆D₆) und Methyl-Gruppen (0,77 bis 0,00 ppm in C₆D₆) quantitativ vermessen, woraus sich ein Verhältnis von 0,18 zu 3 der Hydrido- zu den Methyl-Gruppen ergab. Zusätzlich wurde von dem Harz ein ¹H-NNR mit einem Standard (Cyclohexan) aufgenommen und damit die Einheiten-Verhältnisse des Harzes bestimmt: M'/M = 1,0 und (M+M')/(D+T+Q) = 0,5. Anhand von der ²⁹Si(IG)-NMR-Spektroskopie wurden die funktionellen Einheiten, wie in Formel (I) beschrieben, den Signalen zugeordnet: M-Einheiten 12,4 ppm, M'-Einheiten -1,6 ppm, T-Einheiten -100,5 ppm und Q-Einheiten -109,1 ppm. Ein Signal der D-Einheiten konnten nicht bestimmt werden. Zudem wurde über Integration der Signale ein M'/M-Verhältnis von 0,7 und ein (M+M')/(T+Q)-Verhältnis von 0,7 bestimmt. Durch die *Gel-Permeations-Chromatographie* (GPC) wurden die mittleren Molmassen *M*ₙ ("Anzahl-Mittelwert") = 799 g/mol und *M*_{w} ("Gewichts-Mittelwert") = 1048 g/mol sowie eine Molmassenverteilung (PDI) von 1,31 ermittelt. Das Siliconharz besaß einen Erweichungspunkt von 94,7 bis 111,1 °C.

### Beispiel A2

Es wurde der gleiche Aufbau wie in Beispiel 1 verwendet. Das SLG bestand aus 140 mL Ethylacetat, 13,90 g (66,74 mmol) TEOS, 3,66 g (33,69 mmol) TMCS und 2,16 g (22,87 mmol) DMCS. Somit wurde ein DMCS/TMCS-Verhältnis von 0,69 und ein (DMCS+TMCS)/TEOS-Verhältnis von 0,86 eingesetzt. Für das SLG wurde eine Fließrate von 16,4 mL/min und für das deionisierte Wasser wurde eine Fließrate von 1,25 mL/min gewählt. 5 min nach dem Beginn des gleichzeitigen Eintrages von Wasser und SLG wurde die Peristaltikpumpen für den Austrag der Reaktionslösung mit einer Fließrate von 10,25 mL/min in ein Auffanggefäß überführt. Als das SLG leer war, wurde die Peristaltikpumpen des SLG und Wassers abgeschaltet. Die Aufarbeitung erfolge wie in Beispiel A1. Es wurde eine Ausbeute von 7,9 g (95,2%) erhalten.

Bei einer ATR-IR-Messung wurden für die Hydrido-, Methyl- und Hydroxy-Gruppen sowie Wasser Banden mit den gleichen Wellenzahlen wie bei Beispiel 1 bestimmt. Mittels ¹H-NMR-Sprektroskopie wurden die Signale der Hydrido- (5,03 ppm in C₆D₆) und Methyl-Gruppen (0,79 bis -0,14 ppm in C₆D₆) quantitativ vermessen, woraus sich ein Verhältnis von 0,18 zu 3 der Hydrido- zu den Methyl-Gruppen ergab. Zusätzlich wurde von dem Harz ein ¹H-NNR mit einem Standard (Cyclohexan) aufgenommen und damit die Einheiten-Verhältnisse des Harzes bestimmt: M'/M = 0,7 und (M+M')/(D+T+Q) = 0,9. Anhand von der ²⁹Si(IG)-NMR-Spektroskopie wurden die funktionellen Einheiten, wie in Formel (I) beschrieben, den Signalen zugeordnet: M-Einheiten 12,3 ppm, M'-Einheiten -2,0 ppm, T-Einheiten -100,1 ppm und Q-Einheiten - 107,6 ppm. Ein Signal der D-Einheiten konnten nicht bestimmt werden. Zudem wurde über Integration der Signale ein M'/M-Verhältnis von 0,7 und ein (M+M')/(T+Q)-Verhältnis von 0,9 bestimmt. Durch die *Gel-Permeations-Chromatographie* (GPC) wurden die mittleren Molmassen *M*ₙ = 1543 g/mol und *M*_{w} = 2469 g/mol sowie ein PDI von 1,60 ermittelt. Das Siliconharz besaß einen Erweichungspunkt von 66,6 bis 86,3 °C.

### Beispiel A3

Als Reaktionskolben wurde ein 500 mL-Dreihalskolben auf 60 °C temperiert und mit einem KPG-Rührer (Flügelrührer) sowie einem Dimroth-Kühler versehen. In diesen Reaktionskolben wurden 70 mL Ethylacetat vorgelegt. Anschließend wurden 6,10 g (29,26 mmol) TEOS, 1,86 g (17,07 mmol) TMCS, 1,21 g (12,82 mmol) DMCS und danach 10 g deionisiertes Wasser schnell hinzugegeben. Somit wurde ein DMCS/TMCS-Verhältnis von 0,75 und ein (DMCS+TMCS)/TEOS-Verhältnis von 1,02 eingesetzt. Die Reaktion wurde 2 min bei 60 °C und starker Durchmischung des KPG-Rührers gehalten und dann mit einem kalten Wasserbad auf Raumtemperatur abkühlen lassen. Bei der Aufarbeitung wurde wie bei Beispiel A1 vorgegangen. Es wurde eine Ausbeute von 3,6 g (90,1%) erhalten.

Bei einer ATR-IR-Messung wurden für die Hydrido-, Methyl- und Hydroxy-Gruppen sowie Wasser Banden mit den gleichen Wellenzahlen wie bei Beispiel 1 bestimmt. Mittles ¹H-NMR-Sprektroskopie wurden die Signale der Hydrido- (5,04 ppm in C₆D₆) und Methyl-Gruppen (0,86 bis 0,01 ppm in C₆D₆) quantitativ vermessen, woraus sich ein Verhältnis von 0,17 zu 3 der Hydrido- zu den Methyl-Gruppen ergab. Zusätzlich wurde von dem Harz ein ¹H-NNR mit einem Standard (Cyclohexan) aufgenommen und damit die Einheiten-Verhältnisse des Harzes bestimmt: M'/M = 0,8 und (M+M')/(D+T+Q) = 0,6. Anhand von der ²⁹Si(IG)-NMR-Spektroskopie wurden die funktionellen Einheiten, wie in Formel (I) beschrieben, den Signalen zugeordnet: M-Einheiten 12,4 ppm, M'-Einheiten -1,6 ppm, T-Einheiten -100,7 ppm und Q-Einheiten - 109,6 ppm. Ein Signal der D-Einheiten konnten nicht bestimmt werden. Zudem wurde über Integration der Signale ein M'/M-Verhältnis von 0,8 und ein (M+M')/(T+Q)-Verhältnis von 0,9 bestimmt. Durch die *Gel-Permeations-Chromatographie* (GPC) wurden die mittleren Molmassen *M*ₙ = 182 g/mol und *M*_{w} = 879 g/mol sowie ein PDI von 4,83 ermittelt. Das Siliconharz besaß keinen Erweichungspunkt bis 270 °C.

### Beispiel A4

Ein 500 mL-Dreihalskolben wurde mit einem KPG-Rührer (Flügelrührer) sowie einem Dimroth-Kühler und mit einem Ölbad auf 50 °C temperiert wurde. Es wurden 80 mL Ethanol, 55 mL H₂O, 0,03 mL konz. H₂SO₄ und anschließend 60,3 g (0,289 mol) TEOS hinzugegeben. Das Gemisch wurde für 2,5 h bei 50 °C gerührt. Dann wurde ein Gemisch aus 14,630 g (90,1 mmol) Hexamethyldisiloxan, 7,337 g (54,6 mmol) 1,1,3,3-Tetramethyldisiloxan und 90 mL Toluol in den Kolben gegeben. Anschließend wurden 3 mL konz. H₂SO₄ hinzugetropft. Das Gemisch wurde für 1 h bei 60 °C, 1 h bei 70 °C und 2 h bei 80 °C weiter gerührt. Bei der Aufarbeitung wurde wie in Beispiel A1 vorgegangen. Es wurde eine Ausbeute von 36,9 g (93,9 %) erhalten.

Bei einer ATR-IR-Messung wurden für die Hydrido-, Methyl- und Hydroxy-Gruppen sowie Wasser Banden mit den gleichen Wellenzahlen wie bei Beispiel 1 bestimmt. Mittels ¹H-NMR-Sprektroskopie wurden die Signale der Hydrido- (5,00 ppm in C₆D₆) und Methyl-Gruppen (0,78 bis 0,00 ppm in C₆D₆) quantitativ vermessen, woraus sich ein Verhältnis von 0,13 zu 3 der Hydrido- zu den Methyl-Gruppen ergab. Zusätzlich wurde von dem Harz ein ¹H-NNR mit einem Standard (Cyclohexan) aufgenommen und damit die Einheiten-Verhältnisse des Harzes bestimmt: M'/M = 0,7 und (M+M')/(D+T+Q) = 0,9. Anhand von der ²⁹Si(IG)-NMR-Spektroskopie wurden die funktionellen Einheiten, wie in Formel (I) beschrieben, den Signalen zugeordnet: M-Einheiten 12,3 ppm, M'-Einheiten -2,0 ppm, D-Einheiten -17,1 ppm, T-Einheiten -100,5 ppm und Q-Einheiten -108,0 ppm. Zudem wurde über Integration der Signale ein M'/M-Verhältnis von 0,6 und ein (M+M')/(D+T+Q)-Verhältnis von 0,9 bestimmt. Durch die *Gel-Permeations-Chromatographie* (GPC) wurden die mittleren Molmassen *M*ₙ = 7060 g/mol und *M*_{w} = 8473 g/mol sowie ein PDI von 1,20 ermittelt. Das Siliconharz besaß einen Erweichungspunkt von 152,7 bis 203,9 °C.

### B. Vernetzungsreaktion

Die Siliconharze der Formel (I) werden mit den Siliconölen der Formel (II) über eine platinkatalysierte Hydrosilylierungsreaktion vernetzt. Hydrosilylierungsreaktionen dieses Typs sind bekannt und die Reaktionsbedingungen können analog vorgegeben werden. Der Fachmann kann sich hierbei beispielsweise an US 5,684,112 A orientieren.

Konkret konnten in ersten Versuchen elastische Formkörper durch Vernetzung der hergestellten Siliconharze mit Siliconölen, die endständige Vinylgruppen aufwiesen, hergestellt werden. Neben dem Siliconölen enthielten die Vernetzerlösungen einen Karstedt-Katalysator (CAS 68478-92-2; Produktnummer SIP6830.3 von der Firma Gelest, Inc.) und ein unpolares Lösungsmittel wie Toluol, Xylol, 1-Heptanol, Cyclohexanon oder Pentylacetat. Die Vernetzung zur Erzeugung von Probenkörpern erfolgte in 30 bis 60 Sekunden bei 50 °C bis 80 °C. Zudem gelang auch bei Raumtemperatur der Druck von mehrschichtigen Formkörpern bei dem Eintrag der Vernetzerlösung in ein Pulverbett mittels eines Microdosiersystems. Die Elastizität konnte über die Kettenlänge der Siliconöle eingestellt werden. Dabei wurden Siliconöle mit der molaren Masse von 800 bis 28.000 g/mol eingesetzt. Zusätzlich konnten durch Additive wie z.B. pyrogenes SiO₂ (wie beispielsweise SIS6962.0 und SIS6960.0 von Gelest, inc.) die mechanischen Eigenschaften der Probenkörper verbessert werden. Dabei wurden Massenanteile von 0-60 Gew.% des pyrogenen SiO₂ in Verbindung mit den hergestellten Siliconharzen verwendet.

Das pulverförmige Siliconharz wird Schicht für Schicht ausgestrichen und mittels der Vernetzerlösung verknüpft. Dadurch ergibt sich ein gegenüber bekannten Verfahren deutlich schnelleres und günstigeres Verfahren zum 3D-Druck von elastischen Objekten.

Das verwendete Siliconharz wurde mittels Sprühtrocknung in kleine (Durchmesser ca. 2 - 25 µm) sphärische Partikel überführt. Für die Sprühtrocknung wurde die Sprühtrocknungsanlage B-290 und Inert Loop B-295 von BÜCHI Labortechnik GmbH verwendet. Dabei wurden folgende Parameter gewählt: Tᵢₙₗₑₜ = 100 - 180 °C, Produkt/Lösungsfördergeschwindigkeit = 5 bis 30 mL/min, Produktkonzentration der Ethylacetatlösung = 8 - 65 %, N₂-Flow = 300 - 700 L/h, Aspirators = 20 - 35 m³/h. Dadurch wurden Tₒᵤₜₗₑₜ = 40 - 90 °C erzielt. Dabei wurde angestrebt, dass die Tₒᵤₜₗₑₜ unter dem Erweichungspunkt des versprühten Harzes lag. Durch Variation der Lösungszusammensetzung, Inlet-Temperatur, Durchflussgeschwindigkeit des Aspirators, N₂-Flow kann die Form und Größe der erhaltenen Partikel gezielt eingestellt werden. Durch beispielweise Erhöhung der Konzentrationen und Erhöhung der Eintragsgeschwindigkeiten der Siliconharzlösung sowie Verringerung des N₂-Flows können größere Partikel erhalten werden. Zusätzlich haben auch Parameter wie die Größe der Sprühdrüse einen Einfluss auf die Beschaffenheit des Siliconharzpulvers.

Beispielsweise wurde eine 30 %ige Siliconharz-Ethylacetatlösung bei 100 °C Inlet-Temperatur 46 °C Outlet-Temperatur, 30 m³/h Durchflussgeschwindigkeit des Aspirators, 400 L/h N₂-Flow und 7,4 mL/min Eintragsgeschwindigkeit der Lösung sprühgetrocknet. Mittels Mikroskopie wurde eine sphärische Beschaffenheit des Siliconharzes mit Durchmesser von 2 bis 20 µm bestätigt.

Für die Vernetzungstest wurden verschiedene Vernetzerlösungen hergestellt, die aus 80 - 98 Gew.% des Siliconöls DMS-V05, -V21, -V22, -V25 oder -V31 (CAS 68083-19-2) von Gelest, Inc., 2 - 20 Gew.% aus Toluol oder Xylol und aus 0,01 - 1,5 Gew.% der Karstedt-KatalysatorLösung SIP6830.3 von Gelest, Inc. bestanden. Anstelle der genannten unpolaren Lösungsmittel ließ sich auch Ethanol in gleicher Konzentration verwenden, wodurch eine Dispersion erhalten wurde. Das SIP6830.3 bestand aus 3 % aus dem Karstedt-Katalysator, > 90 % aus einem langkettigen Dimethylpolysiloxan mit terminalen Vinylgruppen und < 5 % Divinyltetramethyldisiloxan. Somit ergibt sich ein Karstedt-Katalysator-Anteil der Vernetzerlösungen von 5 bis 450 ppm. Aus 50 - 70 Gew.% (beispielsweise 1000 mg) der Vernetzerlösungen in Kombination mit 30 - 50 Gew.% (beispielsweise 800 mg) einem Pulvergemisch, welches aus 40 - 100 Gew.% (beispielsweise 600 mg) des hergestellten Siliconharzes und 0 - 60 Gew.% (beispielsweise 200 mg) eines Additivs (beispielsweise pyrogenes SiO₂) bestand, wurden Probenkörper erhalten. Dabei wurden Temperaturen von 20 - 80 °C verwendet. Zusätzlich konnten auch farbige Probenköper durch das Beimengen von Pigmenten wie z.B. die anorganischen Pigmente (beispielsweise PS 22-5091 PK Pigment Blue, PS 24-3095 PK Pigment black, PS 21-4301 Ni free Pigment green von Ferro GmbH, Bayferrox 318 M, Bayferrox 318 M von Lanxess Deutschland GmbH und Heucodur Yellow 8G (P) von Heubach GmbH) erhalten werden. Dabei wurde entweder der Vernetzerlösung oder dem Pulvergemisch 0,1 bis 5 Gew.% des jeweiligen Pigmentes beigemischt.

Zudem wurden mittels Microdosiersysteme (MDS 3020⁺ und MDS 1560 von VERMES Microdispensing GmbH) erste mehrschichtige elastische Formkörper bei Raumtemperatur gedruckt. Dabei wurde eine Vernetzerlösung in 10 - 250 µg-Dosiermengen in Tropfenabständen von 0,5 - 1,2 mm auf das Siliconharz im Pulverbett aufgetragen. Das Pulver wurde in Schichtdicken von 0,2 - 1,2 mm ausgestrichen. Dabei wurden elastische Probenkörper mit den Abmaßen von beispielsweise 15x15x1 mm hergestellt. Die Vernetzung wurde zusätzlich durch eine Bestrahlung einer 250 W-IR-Lampe (thermische Nachbehandlung) beschleunigt. Dabei wurde entweder jede Schicht einzeln bestahlt oder erst nach mehreren Schichten.

### Beispiel B1

Aus dem in Beispiel A1 hergestellten Siliconharz wurde eine 30 %ige Ethylacetat-Lösung hergestellt und bei 100 °C Inlet-Temperatur, 46 °C Outlet-Temperatur, 30 m³/h Durchflussgeschwindigkeit des Aspirators, 400 L/h N₂-Flow und 7,4 mL/min Eintragsgeschwindigkeit der Siliconharzlösung sprühgetrocknet. Mittels Mikroskopie wurde eine sphärische Beschaffenheit des Siliconharzes mit Durchmesser von 2 bis 20 µm bestätigt. Für den Vernetzungstest wurde eine Vernetzerlösung (D2) bestehend aus 89,9 Gew.% DMS-V22, 9,5 Gew.% Toluol und 0,60 Gew.% SIP6830.3 hergestellt. 80 mg des sprühgetrockneten Siliconharzes wurden mit 150 mg der D2 in einem Vial zusammengegeben. Das Vial wurde für 30 sec auf 50 °C erhitzt. Der entstandene Probenkörper wurde aus dem Vial herausgelöst. Unter dem Probenkörper lag noch ein gewisser Teil des Siliconharzes vor, da die Vernetzerlösung sehr schnell mit dem Harz reagierte und dadurch eine undurchdringliche Schicht für die weitere Vernetzerlösung bildete, die auf dem Probenkörper zurückblieb. Überschüssiges Siliconharz und Vernetzerlösung wurden entfernt, sodass ein ziemlich glatter, elastischer und formstabiler Probenkörper, indem einige kleine Gasbläschen eingeschlossen wurden, erhalten wurde. Mittels eines Shore-Durometers wurde eine Shorehärte von 25 Shore A bestimmt.

### Beispiel B2

Es wurde das gleiche sprühgetrocknete Harz wie in Beispiel B1 verwendet. Es wurde eine Vernetzerlösung (D3) bestehend aus 89,4 Gew.% DMS-V25, 10,0 % Toluol und 0,61 Gew.% SIP6830.3 hergestellt. 110 mg des sprühgetrockneten Siliconharzes wurden mit 240 mg der D3 in einem Vial zusammengegeben. Es wurde im Weiteren verfahren wie in Beispiel B1. Auch lag ein kleiner Teil des Harzes und der Vernetzerlösung nach dem Ausbinden des Probekörpers unvernetzt vor. Es wurde ein deutlich elastischer Probenkörper als in Beispiel B1 erhalten. Mittels eines Shore-Durometers wurde eine Shorehärte von 20 Shore A bestimmt. Somit wurde im Vergleich von Beispiel B1 zu B2 durch Verwendung einer Vernetzerlösung auf Basis eines linearen Dimethylpolysiloxans mit terminalen Vinylgruppen, welches eine größere Molmasse besaß, eine höhere Elastizität erzielt.

### Beispiel B3

Aus dem in Beispiel A4 hergestellten Siliconharz wurde eine 40 %ige Ethylacetat-Lösung hergestellt und bei 170 °C Inlet-Temperatur, 71 °C Outlet-Temperatur, 30 m³/h Durchflussgeschwindigkeit des Aspirators, 450 L/h N₂-Flow und 16,2 mL/min Eintragsgeschwindigkeit der Siliconharzlösung sprühgetrocknet. Mittels Mikroskopie wurde eine sphärische Beschaffenheit des Siliconharzes mit Durchmesser von 5 bis 30 µm bestätigt. Es wurde ein Pulver (P1) hergestellt, welches aus 75 Gew.% aus dem Siliconharzpulver und 25 Gew.% aus pyrogenen SiO₂ (SIS6962.0 von der Firma Gelest, Inc.) bestand. Außerdem wurde eine Vernetzerlösung (D4) bestehend aus 94,8 Gew.% DMS-V21, 5,1 % Pentylacetat und 0,09 Gew.% SIP6830.3 hergestellt. In einer aus Teflon hergestellten Gussform wurden 800 mg P1 mit 1000 mg D4 vermischt und für 1 min bei 80 °C ausgehärtet. Es wurde ein sehr elastischer und zugfester Probenkörper erhalten mit einer Shorehäre von 38 Shore A.

### Beispiel B4

Zu der Vernetzerlösung D4 wurden 1 Gew.% des Pigmentes PS 21-4301 Ni-free Green von der Ferro GmbH hinzugegeben und gut durchmischt. Aus der pigmentierte D4 in Kombination mit P1 wurde, wie in Beispiel B3 ein Probenkörper hergestellt. Es wurde ein grüner Probenkörper mit vergleichbaren mechanischen Eigenschaften wie der Probenkörper aus dem Beispiel B3 erhalten.

### Beispiel B5

Das P1, welches in Beispiel B3 beschrieben wurde, wurde in einem Pulverbett-3D-Druckversuchsaufbau verwendet. Dabei wurde das Pulver in einer Sichtdicke von 0,3 mm ausgestrichen. Anschließend wurde mit dem Microdosiersystem 1560 von VERMES Microdispensing GmbH die Vernetzerlösung D4 in einem Tropfengewicht von 150 µg mit einem Tropfenabstand von 1 mm eingetragen, sodass eine Fläche von 15x15 mm des Pulvers mit der Vernetzerlösung versehen wurde. Der Ausstreich- und Dosiervorgang wurde drei weitere Male wiederholt, sodass ein vierschichtiger elastischer Probenkörper (Quader mit den Abmaßen 15x15x1 mm) erzeugt wurde. Mittels einer 250 W-IR-Lampe wurde der Probenkörper für 1 min bestrahlt (thermische Nachbehandlung), um eine vollständige Quervernetzung zu gewährleisten. Anschließend wurde das nicht vernetzte Pulver entfernt und der Probenkörper von der Bauplattform entfernt. Anschließend wurde der Probenkörper mit Ethanol gewaschen, um das restliche überschüssige Pulver zu entfernen.

## Patentansprüche

1. Pulverbett-3D-Druckverfahren zur Herstellung elastischer Formkörper aus Siliconen, umfassend die Schritte:
a) Schichtweises Ausstreichen eines Pulvers in einer Pulverbett-3D-Apparatur, wobei das Pulver ein Siliconharz der Formel (I) enthält:
M_{y}M'_{z}DₐT_{b}Q_{c} (I)
mit
M = [R₃SiO_{1/2}]
M' = [R'R₂SiO_{4/2}]
D = [R₂SiO_{2/2}]
T = [RSiO_{3/2}]
Q = [SiO_{4/2}]
wobei jedes R unabhängig voneinander für C1-C10 Alkoxy, C1-C10 Alkyl, C6-C10 Aryl oder Hydroxy steht und
R' = H ist
und wobei für die Indizes gilt y = 0 bis 400
z = 2 bis 440
a = 0 bis 60
b = 0 bis 40
c = 6 bis 400 $400 \geq a + b + c \geq 9$ und $\left(z+y\right) / \left(a+b+c\right) = 0 , 3 bis 1 , 1 ;$
b) Auftragen einer Vernetzerlösung auf der Schicht aus Schritt a) entsprechend einer Druckvorlage für den elastischen Formkörper, wobei die Vernetzerlösung einen Hydrosilylierungs-Katalysator und ein Siliconöl der allgemeinen Formel (II) umfasst:
MₐM'_{b}D_{c}D'_{d} (II)
mit
M = [R₃SiO_{1/2}]
M' = [R'R₂SiO_{4/2}]
D = [R₂SiO_{2/2}]
D' = [R'RSiO_{2/2}]
wobei jedes R unabhängig voneinander für C1-C10 Alkyl oder C6-C10 Aryl steht und R' für Vinyl steht
und wobei für die Indizes gilt
a = 0 bis 2
b = 0 bis 2
c = 8 bis 500
d = 0 bis 20 $a + b = 2$ und $b + d \geq 2 ;$
c) Wiederholen der Schritte a) und b) entsprechend der Druckvorlage für den elastischen Formkörper; und
d) Entfernern des nicht vernetzten Pulvers.

2. Verfahren nach Anspruch 1, bei dem im Schritt a) ein Siliconharz der Formel (I) verwendet wird, bei dem R für Methyl und/oder Ethoxy steht.

3. Verfahren nach einem der vorhergehenden Ansprüche, bei dem im Schritt a) ein Siliconharz der Formel (I) verwendet wird, bei dem y = 0 bis 200 und/oder z = 2 bis 220 und/oder a = 0 bis 30 und/oder b = 0 bis 20 und/oder c = 6 bis 200 und/oder 200 ≥ a + b + c ≥ 9 und/oder z/y = 0,2 bis 10 und/oder (z+y)/(a+b+c) = 0,3 bis 1,0 ist.

4. Verfahren nach einem der vorhergehenden Ansprüche, bei dem im Schritt a) ein Pulver mit dem Siliconharz der Formel (I) verwendet wird, das einen mittleren Partikeldurchmesser D50 bestimmt nach der in der Beschreibung angegebenen Methode im Bereich von 5 bis 250 µm aufweist.

5. Verfahren nach einem der vorhergehenden Ansprüche, bei dem im Schritt a) ein Siliconöl der Formel (II) verwendet wird, bei dem R für Methyl steht.

6. Verfahren nach einem der vorhergehenden Ansprüche, bei dem im Schritt a) ein Siliconöl der Formel (II) verwendet wird, bei dem d = 0 und b = 2 ist und/oder c = 50 bis 250 ist.

7. Verfahren nach einem der vorhergehenden Ansprüche, bei dem im Schritt b) als Hydrosilylierungs-Katalysator 1,1,3,3-Tetramethyl-1,3-divinyldisiloxan-platin verwendet wird.

8. Verfahren nach einem der vorhergehenden Ansprüche, bei dem in dem sich wiederholenden Schritt a) Pulver mit unterschiedlicher Zusammensetzung und/oder in dem sich wiederholenden Schritt b) Vernetzerlösungen mit unterschiedlicher Zusammensetzung eingesetzt werden.

9. Pulver enthaltend ein Siliconharz der Formel (I):
M_{y}M'_{z}DₐT_{b}Q_{c} (I)
mit
M = [R₃SiO_{1/2}]
M' = [R'R₂SiO_{1/2}]
D = [R₂SiO_{2/2}]
T = [RSiO_{3/2}]
Q = [SiO_{4/2}]
wobei jedes R unabhängig voneinander für C1-C10 Alkoxy, C1-C10 Alkyl, C6-C10 Aryl
oder Hydroxy steht und
R' = H ist
und wobei für die Indizes gilt
y = 0 bis 400
z = 2 bis 440
a = 0 bis 60
b = 0 bis 40
c = 6 bis 400 $400 \geq a + b + c \geq 9$ und $\left(z+y\right) / \left(a+b+c\right) = 0 , 3 bis 1 , 1 .$

## Claims

1. A powder-bed 3D printing method for producing elastic molded articles from silicones, comprising the following steps:
a) spreading a powder in layers in a powder-bed 3D apparatus, wherein the powder contains a silicone resin of formula (I):
M_{y}M'_{z}DₐT_{b}Q_{c} (I)
with
M = [R₃SiO_{1/2}]
M' = [R'R₂SiO_{1/2}]
D = [R₂SiO_{2/2}]
T = [RSiO_{3/2}]
Q = [SiO_{4/2}]
wherein each R independently represents C1-C10 alkoxy, C1-C10 alkyl, C6-C10 aryl, or hydroxy, and
R' = H
and wherein the indices satisfy the following conditions:
y = 0 to 400
z = 2 to 440
a = 0 to 60
b = 0 to 40
c = 6 to 400 $400 \geq a + b + c \geq 9$ and $\left(z+y\right) / \left(a+b+c\right) = 0.3 to 1.1 ;$
b) applying a crosslinker solution onto the layer from the step a) according to a printing pattern for the elastic molded article, wherein the crosslinker solution comprises a hydrosilylation catalyst and a silicone oil of general formula (II):
MₐM'_{b}D_{c}D'_{d} (II)
with
M = [R₃SiO_{1/2}]
M' = [R'R₂SiO_{1/2}]
D = [R₂SiO_{2/2}]
D' = [R'RSiO_{2/2}]
wherein each R independently represents C1-C10 alkyl or C6-C10 aryl, and
R' represents vinyl
and wherein the indices satisfy the following conditions:
a = 0 to 2
b = 0 to 2
c = 8 to 500
d = 0 to 20 $a + b = 2 ,$ and $b + d \geq 2 ;$
c) repeating the steps a) and b) according to the printing pattern for the elastic molded article; and
d) removing uncrosslinked powder.

2. The method according to claim 1, wherein in the silicone resin of formula (I) used in the step a), R represents methyl and/or ethoxy.

3. The method according to any one of the preceding claims, wherein in the silicone resin of formula (I) used in the step a), y = 0 to 200 and/or z = 2 to 220 and/or a = 0 to 30 and/or b = 0 to 20 and/or c = 6 to 200 and/or 200 ≥a + b + c ≥ 9 and/or z/y = 0.2 to 10 and/or (z+y)/(a+b+c) = 0.3 to 1.0.

4. The method according to any one of the preceding claims, wherein the powder containing the silicone resin of formula (I) used in the step a) has a mean particle diameter D50, determined by a method specified in the description and ranging from 5 to 250 µm.

5. The method according to any one of the preceding claims, wherein in the silicone oil of general formula (II) used in the step a), R represents methyl.

6. The method according to any one of the preceding claims, wherein in the silicone oil of general formula (II) used in the step a), d = 0 and b = 2 and/or c = 50 to 250.

7. The method according to any one of the preceding claims, wherein in the step b), 1,1,3,3-tetramethyl-1,3-divinyldisiloxane-platinum is used as the hydrosilylation catalyst.

8. The method according to any one of the preceding claims, wherein powders with different compositions are used when the step a) is repeated and/or crosslinker solutions with different compositions are used when the step b) is repeated.

9. A powder containing a silicone resin of formula (I):
M_{y}M'_{z}DₐT_{b}Q_{c} (I)
with
M = [R₃SiO_{1/2}]
M' = [R'R₂SiO_{1/2}]
D = [R₂SiO_{2/2}]
T = [RSiO_{3/2}]
Q = [SiO_{4/2}]
wherein each R independently represents C1-C10 alkoxy, C1-C10 alkyl, C6-C10 aryl, or hydroxy, and
R' = H
and wherein the indices satisfy the following conditions:
y = 0 to 400
z = 2 to 440
a = 0 to 60
b = 0 to 40
c = 6 to 400 $400 \geq a + b + c \geq 9$ and $\left(z+y\right) / \left(a+b+c\right) = 0.3 to 1.1 .$

## Revendications

1. Procédé d'impression 3D sur lit de poudre pour la production de corps moulés élastiques en silicone, comprenant les étapes de :
a) étalement par couches d'une poudre dans un appareil d'impression 3D sur lit de poudre, la poudre contenant une résine de silicone de formule (I) :
M_{y}M'_{z}DₐT_{b}Q_{c} (I)
avec
M = [R₃SiO_{1/2}]
M' = [R'R₂SiO_{1/2}]
D = [R₂SiO_{2/2}]
T = [RSiO_{3/2}]
Q = [SiO_{4/2}]
où chaque R représente indépendamment un alcoxy en C1-C10, un alkyle en C1-C10, un aryle en C6-C10 ou un hydroxy et
R' représente H
et où les indices sont définis comme suit
y = 0 à 400
z = 2 à 440
a = 0 à 60
b = 0 à 40
c = 6 à 400 $400 \geq a + b + c \geq 9$ et $\left(z+y\right) / \left(a+b+c\right) = 0 , 3 à 1 , 1 ;$
b) étalement d'une solution de réticulation sur la couche de l'étape a) selon un modèle d'impression pour un corps moulé élastique, la solution de réticulation comprenant un catalyseur d'hydrosilylation et une huile de silicone de formule générale (II) :
MₐM'_{b}D_{c}D'_{d} (II)
avec
M = [R₃SiO_{1/2}]
M' = [R'R₂SiO_{1/2}]
D = [R₂SiO_{2/2}]
D' = [R'RSiO_{2/2}]
où chaque R représente indépendamment un alkyle en C1-C10 ou un aryle en C6-C10 et
R' représente un vinyle
et où les indices sont définis comme suit
a = 0 à 2
b = 0 à 2
c = 8 à 500
d = 0 à 20 $a + b = 2$ et $b + d \geq 2 ;$
c) répétition des étapes a) et b) selon le modèle d'impression pour le corps moulé élastique ; et
d) élimination de la poudre non réticulée.

2. Procédé selon la revendication 1, dans lequel, à l'étape a), une résine de silicone de formule (I) est utilisée, où R représente un méthyle et/ou un éthoxy.

3. Procédé selon l'une quelconque des revendications précédentes, dans lequel, à l'étape a), une résine de silicone de formule (I) est utilisée, où y = 0 à 200 et/ou z = 2 à 220 et/ou a = 0 à 30 et/ou b = 0 à 20 et/ou c = 6 à 200 et/ou 200 ≥ a + b + c ≥ 9 et/ou z/y = 0,2 à 10 et/ou (z+y)/(a+b+c) = 0,3 à 1,0.

4. Procédé selon l'une quelconque des revendications précédentes, dans lequel, à l'étape a), une poudre comportant la résine de silicone de formule (I) est utilisée, laquelle présente un diamètre de particule moyen D50 déterminé selon le procédé indiqué dans la description, compris dans la plage de 5 à 250 µm.

5. Procédé selon l'une quelconque des revendications précédentes, dans lequel, à l'étape a), une huile de silicone de formule (II) est utilisée, où R représente un méthyle.

6. Procédé selon l'une quelconque des revendications précédentes, dans lequel, à l'étape a), une huile de silicone de formule (II) est utilisée, où d = 0 et b = 2 et/ou c = 50 à 250.

7. Procédé selon l'une quelconque des revendications précédentes, dans lequel, à l'étape b), un complexe platine-1,1,3,3-tétraméthyl-1,3-divinyldisiloxane est utilisé en tant que catalyseur d'hydrosilylation.

8. Procédé selon l'une quelconque des revendications précédentes, dans lequel, à l'étape répétitive a), des poudres de composition différente et/ou, à l'étape répétitive b), des solutions de réticulation de composition différente sont utilisées.

9. Poudre contenant une résine de silicone de formule (I) :
M_{y}M'_{z}DₐT_{b}Q_{c} (1)
avec
M = [R₃SiO_{1/2}]
M' = [R'R₂SiO_{1/2}]
D = [R₂SiO_{2/2}]
T = [RSiO_{3/2}]
Q = [SiO_{4/2}]
où chaque R représente indépendamment un alcoxy en C1-C10, un alkyle en C1-C10, un aryle en C6-C10 ou un hydroxy et
R' représente H
et où les indices sont définis comme suit
y = 0 à 400
z = 2 à 440
a = 0 à 60
b = 0 à 40
c = 6 à 400 $400 \geq a + b + c \geq 9$ et $\left(z+y\right) / \left(a+b+c\right) = 0 , 3 à 1 , 1 .$
